# EUROPEAN PATENT APPLICATION

(11) **EP 2 949 209 A1**
(43) Date of publication of application: **02.12.2015**
(21) Application number: 15169889.1
(22) Date of filing: 24.04.2013
(51) Int. Cl.: A01K 79/00, A01K 63/00

(54) **A FISH ACCUMULATOR**

(30) Priority: 24.04.2012 AU 2012901615
(62) Divisional of application: 13782141.9
(71) Applicant: NORDISCHER MASCHINENBAU RUD. BAADER GMBH + CO KG, 23560 Lübeck (DE)
(72) Inventor: Goodrick, Bruce, Sheldon, Queensland 4157 (AU)
(74) Representative: Stork Bamberger

(57) **Abstract**

A fish accumulator (110) for distributing fish, the fish accumulator comprising a tank (120), an entrance (130) in fluid communication with the tank, an exit (140) in fluid communication with the tank, and at least one water rotation device (150) to cause water to rotate water within the tank.

## Description

### FIELD OF THE INVENTION

This invention relates to a fish accumulator, especially in association with a corral for fish. In particular, the invention relates to assisting in preventing undue stress in the fish during the harvest and transfer process to produce high yielding fish flesh and improve the efficiency of the harvest process.

### BACKGROUND OF THE INVENTION

The harvesting of fish is a complex process. One popular manner in which fish are humanely harvested is to capture fish through the use of a net, passing the fish into a distribution table using a fish pump and then stunning and bleeding the fish using a mechanical fish stunning machine. The distribution tank and mechanical fish stunning machine are shown in PCT/AU2003/01615 by the same applicant.

Farmed and wild fish are harvested using nets which are drawn in or "seined" to crowd the fish to a high density. The fish are then sucked through a funnel which is placed in the midst of the "seined" fish. The seining process relies on the progressive tightening of the nets to increase the density of the fish in the nets in order to maintain a desired harvest rate.

This seining process often results in high stress and activity in the fish being harvested. As a result, the oxygen consumption by the fish typically increases exhausting the available oxygen supply and the energy reserves of the fish resulting in the production of lactic acid in the fish muscle. If this lactic acid does not dissipate before the fish is stunned, then quality of the fish flesh is diminished, which results in a smaller yield. If the fish are crowded severely in the seine there will be issues of fish welfare and some of the fish may die prior to harvesting making them unacceptable for processing and resulting in a net loss. Furthermore the dead and stressed fish can cause blockages in the harvest system and/or may cause the fish to be incorrectly oriented in automated harvest systems.

Once the fish pass from the nets through a funnel, they pass into a fish accumulator. The distributor includes a tank in which the fish are accumulated after they pass out of the net. The fish are then passed from the tank of the fish accumulator into a pipe that leads to the distribution table. The fish accumulator is connected to a vacuum - pressure pump which draws air from the tank and as a result water and fish into the accumulator tank. Fish are expelled from the fish accumulator by applying air to the tank increasing the pressure and causing the fish and water to pass out of the fish accumulator into the pipe and subsequently to the distribution table.

Unfortunately it is an instinctive nature of most fish to swim against any current that is created. Accordingly, when fish are sucked from the net through the funnel they turn and try and swim away from the funnel. Even when the fish are within a pipe that transports them to the fish accumulator the fish swim against the current. Similarly, when the fish are being transported from the fish accumulator to the distribution table, the fish swim against the current that is developed.

In both instances this can cause the fish swim strenuously to avoid the exiting water current and result in lactic acid build up within the fish which can in reduce flesh quality. Further, most fish will travel backwards down the pipes. When travelling backwards down the pipe the fish are vulnerable to injury as the edges of the fins and operculum ("gill covers") and can become caught on any internal imperfections of the pipes especially adjacent pipe joins or bends. If the operculum is caught it can become folded back rupturing muscles and/or damaging gills which an cause severe stress and/or bleeding. Furthermore the fish travels much more slowly through the pipe as a result of the fish's action in swimming against the flow of water in the pipe as so remains in the pipes for a much longer time than if travelling forward in the flow.

The reference to any prior art in this specification is not, and should not be taken as, an acknowledgement or any form of suggestion that the prior art forms part of the common general knowledge in Australia.

### OBJECT OF THE INVENTION

It is an object of the invention to overcome or alleviate one or more of the disclosures or provide the consumer with the useful or commercial choice.

### SUMMARY OF THE INVENTION

The invention resides in a fish accumulator for distributing fish, the fish accumulator comprising:
a tank;
an entrance in fluid communication with the tank;
an exit in fluid communication with the tank; and at least one water rotation device to cause water to rotate water within the tank.

The tank is typically substantially cylindrical in shape.

Accordingly, the tank normally has two tanks ends and arcuate tank side wall. The tank may be made from a material that is transparent to view fish located within the tank. This may include the tank ends and/or tank side wall. Alternatively the tank may include at least one viewing window.

The entrance is typically located adjacent to one end of the tank. The entrance is typically orientated substantially tangentially with respect to the tank side wall. That is, the entrance is orientated to direct water into the tank to assist in rotating the water.

A fish guide may be associated with the entrance. The guide may be in the form a helix or screw. Preferably, the fish guide is in the form of a helical platform.

The exit is typically located adjacent to one end of the tank. The exit is typically located adjacent an opposite end of the tank compared to the entrance. The exit is typically orientated substantially tangentially with respect to the tank side wall.

The exit and the entrance are orientated in a similar manner. That is, the location at which the entrance joins the tank and the location at which the exit joins the tank are in longitudinal alignment. It would be appreciated by a person skilled in the art that the orientation of the exit and the entrance may be varied in accordance with design. For example the location at which the entrance joins the tank and the location at which the exit joins the tanks may be at 45, 90, 135, 180, 225, 270 or 315 degrees with respect to each other.

The entrance may be aligned to correspond to the orientation of the rotation of the water within the tank and the exit may be aligned opposite to the orientation of said water rotation.

The at least one rotation device may include any device that causes the water to rotate in a single direction. For example, the water rotation device may be the positioning of the entrance tangentially so that the water within the tank rotates. Similarly the water rotation device may be the helix.

Another rotation device may include a water rotation inlet which directs water into the tank. The water rotation inlet may be orientated substantially tangentially with respect to the tank side wall.

Yet another rotation device may include a spinning member such as impellor, propeller or the like device.

The rotation device may rotate water in the same direction as a direction of the helix.

A vacuum/pressure inlet may be fluidly connected to a pump. The vacuum/pressure inlet may be orientated longitudinally with respect to the tank.

In one form, although not necessarily the only or broadest form, a corral for fish is in association with the fish accumulator according to the invention, the corral comprising:
at least one wall that defines a pathway along which fish are able to travel;
wherein the pathway is inwardly winding.

An enclosure may surround the at least one wall. Alternatively, the at least one wall may form part of the enclosure.

An entrance may form part of the enclosure to allow fish access to the pathway.

Preferably the at least one wall is in the form an inward spiral. Accordingly, the pathway may also be at least in the shape of an inward spiral.

Normally, the pathway directs the fish to a middle of the enclosure. Preferably, the pathway directs the fish toward a centre of the pathway.

The at least one wall may also contain at least one return. The return may be stepped outwardly from the pathway. The return may be arcuate in shape.

The at least one wall may also contain at least one gate. Normally there are a plurality of gates. The gates may be pivotally movable between an open position and a closed position. The gates may form part of the wall when in the closed position. The gates may change the pathway when in an open position. That is, the gates may extend between parts of a wall or between two walls when in the open position.

### BRIEF DESCRIPTION OF THE DRAWINGS

Embodiments of the inventions, by way of example only, will now be described with reference to the accompanying figures in which:
FIG. 1 is a perspective view of a fish corral according to an embodiment;
FIG. 2 is a further perspective view of the fish corral of FIG.1 according to an embodiment;
FIG. 3 is a perspective view of a fish accumulator according to an embodiment of the invention;
FIG. 4 is a top view of the fish accumulator of FIG. 3 according to an embodiment of the invention;
FIG. 5 is a front view of the fish accumulator of FIG. 3 according to an embodiment of the invention; and
FIG. 6 is a side view of the fish accumulator of FIG. 3 according to an embodiment of the invention;

### DETAILED DESCRIPTION OF THE PREFERRED EMBODIMENT

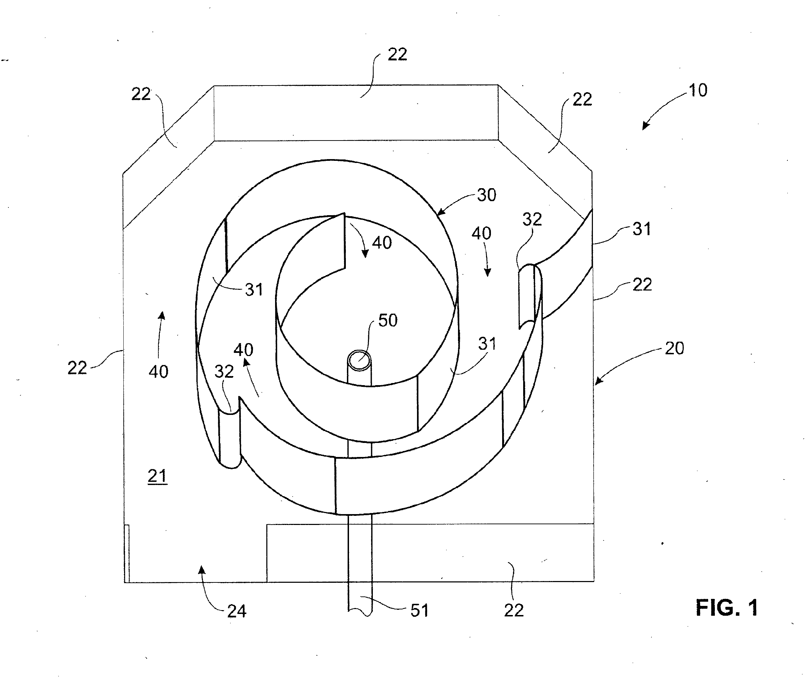

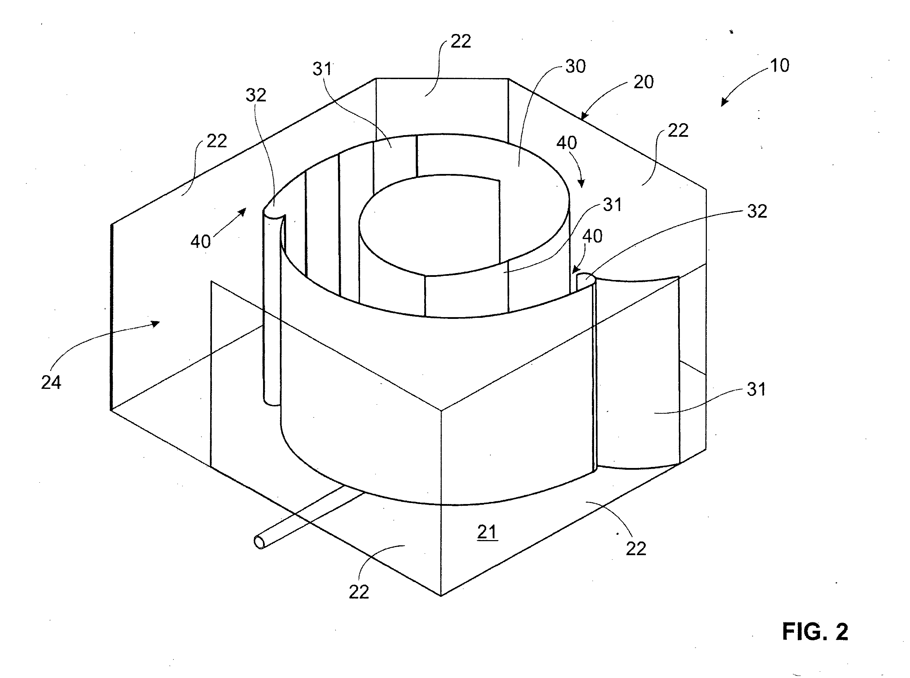

FIG. 1 and 2 show a corral 10 which is used in the harvesting of fish. The corral 10 is constructed from netting. The size of the netting may be varied according to the species and/or size of fish that is to be harvested. It should be appreciated that other types of materials may be used other than netting.

The corral 10 is formed from an enclosure 20 in which is located a single wall 30. The enclosure 20 includes a base 21 and series of upstanding barriers 22. An entrance 24 is located between the barriers 22. It should be appreciated that the size and shape of the enclosure 20 may be varied according to design requirements.

The wall 30 extends upwardly from the base 21 of the enclosure 20. The wall 30 is in the form of a spiral and accordingly is inwardly winding. A pathway 40 is created by the wall 30 in which fish are able to follow. The pathway 40 extends from the entrance 24 of the enclosure 20 to a termination of the inward winding of the spiral wall 30. The termination of the inward winding of the spiral wall 30 is adjacent the centre of the enclosure 20.

The wall 30 includes three gates 31. Each gate 31 is pivotally movable between a closed position and an open position. When in the closed position, the gate 31 forms part of the wall 30. When in the open position, the gate 31 may extend between opposite parts of the wall 30 or the enclosure 20. That is, the gate 31 covers the pathway 40 that is formed by the gate 31.

The wall 30 also includes two arcuate returns 32. The arcuate returns 32 are formed within the wall 30 which is stepped outwardly. Accordingly, the returns 32 are stepped outwardly from the pathway 40.

A funnel 50 connected to a pipe 51 is located adjacent the centre of the enclosure 20 adjacent the termination of the inward winding of the spiral wall 30. The funnel 50 is used to transport fish out of the corral 10.

In use, fish are driven through the entrance 24. The fish then follow the pathway 40 until they are removed through the funnel 50. The gates 31 which form part of the wall 30 can be opened or closed depending on the required density of the fish. The gates 31 are typically used to increase the density of fish within a particular section of the corral 10 by closing the gates 31 to progressively reduce the length of pathway 40 that is accessible to the fish. The gates 31 can also be used to create a loop effectively placing the fish in a holding position if required. It should be appreciated that the height of the corral 10 within the water can also be increased or decreased to increase or decrease the density of the fish.

The returns 32 function such that fish swimming along the pathway 40 in the opposite direction to that intended are redirected in the correct direction. That is, the fish are turned around. As the returns 32 are stepped outwardly from the pathway 40, fish swimming in the opposite direction to that intended are "redirected" in the correct direction while fish swimming in the correct direction are unimpeded.

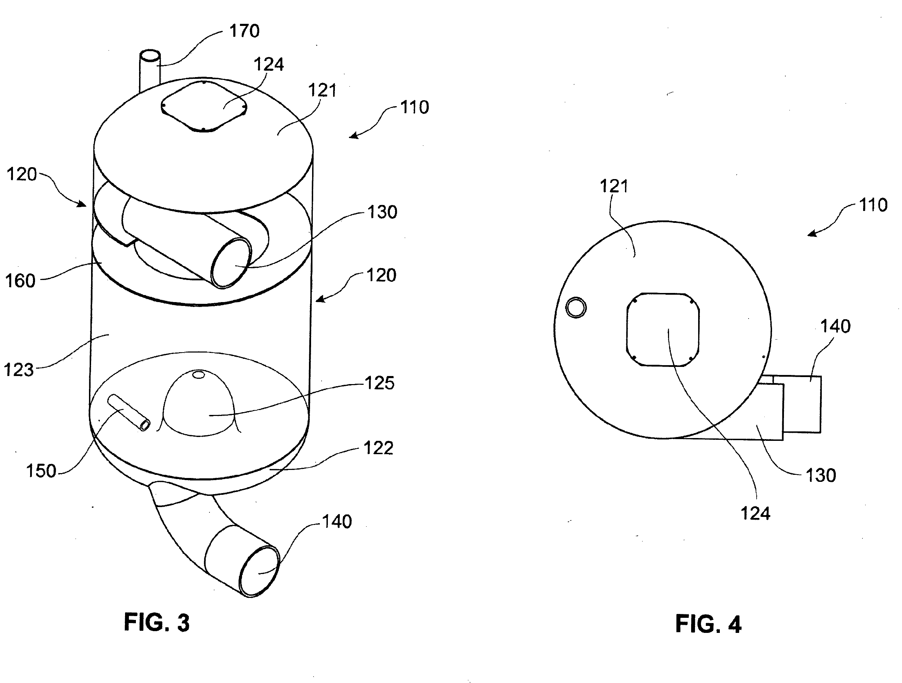

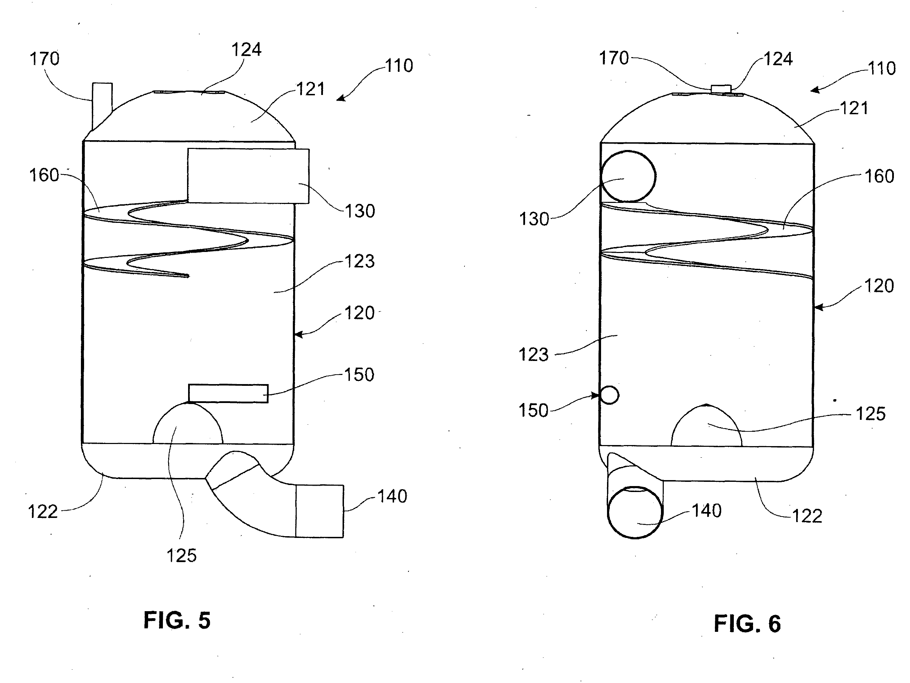

FIGS. 3 to 5 show an fish accumulator 110 that is used to distribute fish after they have been caught but before they have been slaughtered. The fish accumulator 110 includes a tank 120, an entrance 130, an exit 140 and a rotation device 150.

The tank 120 is used to house fish. The tank 120 is a cylindrical in shape and is formed from two ends 121 and 122 interconnected by a curved tank sidewall 123. A viewing window 124 is located within a top tank end 121. A cone 125 is located on a bottom tank end 122 of the tank to assist with water flow within the tank 120.

The entrance 130 is used to pass fish into the tank 120. The entrance is fluidly connected to the funnel 50 which used to transport fish from the corral 10. The entrance 130 is located through the tank side wall 123. The entrance 130 is orientated substantially tangentially with respect to the tank side wall 123.

A fish guide 160 is located within the tank 120 with the start of the fish guide 160 being located adjacent to the entrance 130. The fish guide 160 is in the form of a helical platform which spirals downwardly. Accordingly, when a fish passes through the entrance 130, the fish and water is directed to travel in a clockwise direction within the tank 120.

Further, the fish is directed away from the entrance 130 so not as to block the entrance of any other fish.

The exit 140 is used to remove fish from the tank 120. The exit is located adjacent the bottom tank end 122. The exit 140 is orientated substantially tangentially with respect to the tank side wall in a similar manner to the entrance 130. It should be appreciated that the exit 140 and the entrance 130 do not have to be in alignment. However, exit and the entrance are orientated in a similar tangential manner.

A first rotation device, in the form of a water rotation inlet 150, is mounted within the tank side wall to rotate the water in the same direction (clockwise) as the flow created by the entry 130. Accordingly the water rotation inlet is orientated substantially tangentially with respect to the tank side wall 23. The water inlet is oriented in the same direction to that of the entrance 130 and the exit 140.

A vacuum/pressure inlet 170 is fluidly connected to tank 120.

The vacuum/pressure inlet 170 is used to pass water into and out of the tank 120 using an associated pump (not shown). The vacuum/pressure inlet 170 is orientated longitudinally with respect to the tank 120 so that the passing of water into and out of the tank 120 does not contribute substantially to the flow of the water within the tank 120.

An entrance valve (not shown) and an exit valve (not shown) is used in conjunction with the vacuum/pressure inlet 170 when passing water into and out of the tank 120 via the vacuum/pressure inlet 170.

In use, the tank 120 is substantially full of water. The water rotation inlet 150 is operated as necessary to help maintain the water rotation when the tank is emptied and as necessary at other times to maintain the rotation velocity.

When fish are to be transported into the tank 120 from the corral 10, the exit valve is closed and the entrance valve is opened. A vacuum is then drawn through vacuum/pressure inlet 170. Water and fish is then sucked through the vacuum/pressure inlet 170. This causes water and fish to be drawn from within the corral 10. Water and fish then pass through the entrance 130 and are directed along the fish guide 160 into the tank 120. The fish guide 160 enables a gentle entry of the fish into the tank 20 (as opposed to a sudden drop).

Once the fish are located within the tank 120, the fish will naturally swim against the current. When fish enter the tank tail first they are already in the current orientation relative to the exit. Fish entering head first are expected to change direction to swim in to the water current in the tank 120. Accordingly, if the current (created by movement of the water) is flowing in a clockwise direction, then the fish will swim in an anti-clockwise direction. It should be appreciated that the exit valve and the entrance valve can be closed with no water passing through the vacuum/pressure inlet to hold the fish within the tank 120.

In order to transport fish out of the tank 120, the exit valve is opened and the entrance valve is closed. Air is then pumped through the vacuum/pressure inlet 170 to transport the fish through the exit 140. It should be appreciated that as the fish are facing in an anti-clockwise direction, their head is facing toward the exit 140. Accordingly, it is envisaged that the majority of fish will pass head first through the exit 140. It is therefore also envisaged that the damage a fish can sustain, by passing through the exit tail first, is reduced or eliminated.

In an alternative embodiment of the invention water and fish may be pumped on a continuous basis through the tank, using the same entry and exit points but without the need for valves on the inlet or outlet.

In this specification, the terms "comprise", "comprises", "comprising" or similar terms are intended to mean a non-exclusive. inclusion, such that a system, method or apparatus that comprises a list of elements does not include those elements solely, but may well include other elements not listed.

It will also be appreciated that various other changes and modifications may be made to the invention described without departing from the spirit and scope of the invention.

## Claims

1. A fish accumulator (110) for distributing fish, the fish accumulator comprising:
a tank (120);
an entrance (130) in fluid communication with the tank (120);
an exit (140) in fluid communication with the tank (120); and
at least one water rotation device (150) to cause water to rotate within the tank (120).

2. The fish accumulator of claim 1, wherein the tank (120) is substantially cylindrical in shape.

3. The fish accumulator of claim 1 or 2, wherein the tank (120) includes at least one viewing window (14) or is made from transparent material.

4. The fish accumulator of any one of claims 1 to 3, wherein the entrance (130) is located adjacent to one end (121) of the tank (120).

5. The fish accumulator of any one of claims 1 to 4, wherein the entrance (130) is orientated substantially tangentially with respect to a tank side wall (123).

6. The fish accumulator of any one of claims 1 to 5, wherein a fish guide (160) may be associated with the entrance (130).

7. The fish accumulator of claim 6, wherein the fish guide (160) is in the form a helix or screw.

8. The fish accumulator of claim 6 or 7, wherein the fish guide (160) is in the form of a helical platform.

9. The fish accumulator of any one of claims 1 to 3, wherein the exit (140) is located adjacent one end (122) of the tank (120).

10. The fish accumulator of any one of claims 1 to 9, wherein the exit (140) is located adjacent an opposite end (122) of the tank (120) compared to the entrance (130).

11. The fish accumulator of any one of claims 1 to 10, wherein the exit (140) is orientated substantially tangentially with respect to the tank side wall (123).

12. The fish accumulator of any one of claims 1 to 11, wherein the exit (140) and the entrance (130) are orientated in a similar manner.

13. The fish accumulator of any one of claims 1 to 12, wherein the at least one rotation device (150) is in the form of positioning of the entrance (130) tangentially.

14. The fish accumulator of any one of claims 1 to 12, wherein the at least one rotation device (150) is in the form of a helical fish guide (160).

15. The fish accumulator of any one of claims 1 to 12, wherein the at least one rotation device (150) is in the form of a water rotation inlet which directs water into the tank (120).

16. The fish accumulator of claim 15, wherein the water rotation inlet is orientated substantially tangentially with respect to the tank side wall (123).

17. The fish accumulator of any one of claims 1 to 12, wherein the at least one rotation device (150) is in the form of a spinning member such as impellor or propeller.

18. The fish accumulator of any one of claims 1 to 17, wherein a vacuum/pressure inlet (170) is fluidly connected to a pump.

19. The fish accumulator of claim 18, wherein the vacuum/pressure inlet (170) is orientated longitudinally with respect to the tank (120).

20. Arrangement comprising an accumulator according to any one of claims 1 to 19 and a corral (10) for fish, wherein the entrance (130) of the accumulator (110) is fluidly connected to the corral (10).
